(19) Europäisches Patentamt
European Patent Office
Office européen des brevets

(11) **EP 2 530 426 B1**

(12) **EUROPÄISCHE PATENTSCHRIFT**

(45) Veröffentlichungstag und Bekanntmachung des Hinweises auf die Patenterteilung:
**17.06.2020  Patentblatt 2020/25**

(21) Anmeldenummer: **12167956.7**

(22) Anmeldetag: **14.05.2012**

(51) Int Cl.:
**G01B 11/02** *(2006.01)*        **G01B 11/08** *(2006.01)*
**G01B 11/16** *(2006.01)*        **G01B 11/22** *(2006.01)*
**G01B 11/24** *(2006.01)*

(54) **Vorrichtung und Verfahren zur optischen Messung zumindest einer Dimension eines Objektes mittels punktförmiger, divergenter Lichtquellen**

Device and method for optically measuring at least one dimension of an object with point-shaped, divergent light sources

Dispositif et procédé pour mesurer optiquement au moins une dimension d'un objet avec des sources lumineuses divergentes en forme de point

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2011  AT 7992011**

(43) Veröffentlichungstag der Anmeldung:
**05.12.2012  Patentblatt 2012/49**

(73) Patentinhaber: **Jerman, Thomas**
**8010 Graz (AT)**

(72) Erfinder: **Jerman, Thomas**
**8010 Graz (AT)**

(74) Vertreter: **Wirnsberger, Gernot**
**Wirnsberger & Lerchbaum Patentanwälte OG**
**Mühlgasse 3**
**8700 Leoben (AT)**

(56) Entgegenhaltungen:
EP-A1- 2 295 931        EP-A2- 1 479 303
WO-A1-2005/106388        WO-A1-2008/095733
DE-A1-102007 024 525        US-A1- 2006 115 142

**Beschreibung**

Die Erfindung betrifft eine Vorrichtung zur optischen Messung zumindest einer Dimension eines Objektes, insbesondere eines flachen Objektes wie eines Wafers, umfassend zumindest eine im Wesentlichen punktförmige, divergente Lichtquelle, zumindest einen der Lichtquelle gegenüberliegenden Detektor sowie zumindest eine Manipulationseinheit zum Halten und/oder Bewegen des Objektes.

Des Weiteren betrifft die Erfindung ein Verfahren zur optischen Messung zumindest einer Dimension eines Objektes, insbesondere eines flachen Objektes, wobei das Objekt mit punktförmig divergentem Licht beleuchtet und dessen Projektion von zumindest einem sich im Strahlungsbereich befindenden Detektor erfasst wird.

Aus dem Stand der Technik sind diverse Verfahren bzw. Vorrichtungen zur optischen Messung einer Dimension eines Objektes bekannt. Dabei haben sich Verfahren bzw. Vorrichtungen basierend auf punktförmigen, divergenten Lichtquellen insofern als besonders günstig erwiesen, da bei diesen auf eine aufwendige Optik zur Parallelisierung des zu einer Projektion dienenden Lichtes verzichtet wird und dadurch sowohl die Schmutzempfindlichkeit verringert wird als auch optikbedingte Abbildungsfehler entfallen.

Ein Beispiel für eine derartige Einrichtung ist in der DE 101 61 226 A1 beschrieben. Diese Vorrichtung verfügt zwar über alle oben genannten Vorteile, beschränkt sich aber auf die Messung von nur einer Dimension und bedingt zusätzlich einen konstanten Abstand zwischen der Lichtquelle und dem Messobjekt oder eine Bestimmung dessen durch eine weitere von der Einrichtung unabhängige Messung oder eine zusätzliche mathematische Beziehung.

In der DE 197 57 067 A1 wird ein Verfahren zur Messung des Durchmessers eines Stranges, insbesondere eines Kabels kleineren Durchmessers, ohne Zwischenschaltung einer abbildenden Optik mit dem Licht mindestens einer monochromatischen, in der Messebene punktförmigen Lichtquelle beschrieben. Da bei diesem Verfahren der Abstand zwischen Lichtquelle und zu vermessendem Kabelstrang schwankt, ist eine zusätzliche Beziehung notwendig, welche durch eine Auswertung der Beugungssäume an den Schattengrenzen der Projektion berücksichtigt wird. Nachteilig hierbei ist, dass die Beugungssäume durch Schmutzpartikel verfälscht werden können und damit der durch den Verzicht auf ein Linsensystem erzielte Vorteil einer geringeren Schmutzanfälligkeit zumindest teilweise zunichtegemacht wird.

Hingegen ist in der WO 2010/118449 A2 ein flächiger, für die Anwendung an Lichtvorhängen bestimmter Detektor beschrieben, welcher in Abhängigkeit von absorbiertem Licht elektrische Signale generiert und mit einer Anzahl von Abgreifpunkten für die erzeugten Signale versehen ist, wobei die Größe der Signale an den einzelnen Abgreifpunkten von deren Entfernung zu den Teilflächen abhängig ist. Es wird in diesem Dokument zwar eine automatische Bestimmung der Position und der Abmessungen eines Objektes beschrieben, jedoch ist es nicht ohne Weiteres möglich, die Koordinaten der Oberfläche bzw. der Ränder des Objektes teilweise oder als Ganzes zu vermessen, und bedingt darüber hinaus, dass die durch Lichtquellen verursachten Schattenwürfe immer zur Gänze erfasst werden sowie einen komplexeren Aufbau bzw. Auswertung als in der DE 101 61 226 A1 beschrieben.

Aus der DE 10 2007 024 525 A1 ist eine Vorrichtung zur Bewertung von Defekten am Randbereich eines Wafers bekannt.

Derartige Verfahren bzw. Vorrichtungen sind zwar für den jeweiligen Einsatzzweck gut geeignet, aber nicht oder nur schlecht dazu in der Lage, eine zusätzliche Tiefeninformation, also einen Abstand zwischen einer Lichtquelle und einem Objektrand bzw. einem Objektrand und einem Detektor, zu bestimmen. Als nicht einschränkendes illustratives Beispiel hierfür sei die Vermessung von Wafern genannt. Im Laufe einer Waferprozessierung kommt es, insbesondere bei Wafern mit einer Dicke von 300 $\mu$m und darunter, zu Materialspannungen, welche eine nicht unerhebliche Durchbiegung des Wafers bewirken. Da jedoch bei bestimmten Halbleiterprozessierungsschritten, beispielsweise bei einem Lithografieschritt, eine möglichst exakte Ausrichtung des Wafers notwendig ist, um ein optimales Prozessergebnis zu erzielen, ist es erforderlich, auch die Durchbiegung des Wafers zu erfassen. Dies ist bei bzw. mit oben beschriebenen Vorrichtungen bzw. Verfahren nicht möglich oder nur durch zwei oder mehrere voneinander unabhängige eindimensionale Messeinrichtungen möglich, welche allerdings zu einer unnötigen Steigerung der Komplexität des Verfahrens bzw. einer unnötigen Vervielfachung der Vorrichtung und/oder deren Komponenten sowie zu einem gesteigerten Platzbedarf führen.

Aufgabe der Erfindung ist es, eine Vorrichtung der eingangs genannten Art anzugeben, welche eine einfache und robuste Konstruktion erlaubt, möglichst unempfindlich gegenüber Schmutz ist und zusätzlich die Bestimmung einer Tiefeninformation gewährleistet.

Ein weiteres Ziel ist es, ein Verfahren der eingangs genannten Art anzugeben, welches ein einfaches und robustes Verfahren für eine erfindungsgemäße Vorrichtung erlaubt, möglichst unempfindlich gegenüber Schmutz ist und zusätzlich die Bestimmung einer Tiefeninformation gewährleistet.

Die Aufgabe wird mit einer Vorrichtung nach Anspruch 1 gelöst.

Ein mit der Erfindung erzielter Vorteil ist insbesondere darin zu sehen, dass durch die Ausbildung mit mehr als einer punktförmigen, divergenten Lichtquelle die Bestimmung einer Tiefeninformation möglich ist, ohne dabei auf eine einfache, robuste Konstruktion oder eine geringe Schmutzanfälligkeit verzichten zu müssen. Darüber hinaus benötigt die Vorrichtung, durch ihre einfache Konstruktion sowie eine vorteilhafte geringe Anzahl an Komponenten, sehr wenig Raum und erlaubt einen simplen Einbau in bzw. Erweiterung von bestehenden Anlagen.

Es hat sich bewährt, wenn die Lichtquellen eine fächerförmige Abstrahlungscharakteristik aufweisen, um eine optimale Ausleuchtung einer Messebene und/oder des zumindest einen Detektors zu ermöglichen.

Erfindungsgemäß sind mehr als zwei divergente Lichtquellen vorhanden. Insbesondere zur Vermessung einer Höhe von nicht transparenten Objekten, die eine Höhe von mehreren Millimetern aufweisen können, z. B. gewalzte Bleche, können bei Verwendung von zumindest drei Lichtquellen jene Ecken einer Kante gesondert vermessen werden, welche die Höhe bestimmt. Bei einer senkrecht im Messsystem verlaufenden Kante sind drei Lichtquellen ausreichend. Liegt eine schräge Kante vor, sind zumindest vier Lichtquellen vorzusehen, um die Höhe eindeutig zu bestimmen.

Es ist von Vorteil, wenn die Lichtquellen in einer Ebene angeordnet sind. Dies erlaubt eine kompakte Bauform und eine einfache mathematische Modellierung der Vorrichtung.

Mit Vorteil sind zumindest zwei Lichtquellen, vorzugsweise alle, entlang einer Geraden angeordnet, um eine noch kompaktere Bauform und eine noch einfachere mathematische Modellierung der Vorrichtung zu ermöglichen.

Bevorzugt ist bei einer erfindungsgemäßen Vorrichtung der zumindest eine Detektor als optoelektronischer Detektor ausgebildet. Daraus ergibt sich der Vorteil einer digitalen Erfassung und Auswertung der Messdaten.

Von Vorteil ist es auch, wenn zumindest eine Steuereinheit und zumindest eine Auswerteeinheit vorgesehen sind und die zumindest eine Manipulationseinheit mit der Steuereinheit in Wirkverbindung steht. Dies ist besonders günstig, da sowohl das Objekt für eine Messung optimal positioniert als auch die Oberfläche des Objektes in Teilen oder als Ganzes vermessen werden kann und aus den erhaltenen Messdaten die Koordinaten und/oder Dimensionen des Objektes durch die Auswerteeinrichtung bestimmt werden können.

In der Regel ist die zumindest eine Manipulationseinheit parallel oder senkrecht zu einer Messebene drehbar und/oder verschiebbar gelagert, um eine optimale Positionierung des Objektes und/oder sowohl Einzelmessungen als auch Messserien mit definierten geometrischen Beziehungen zu gewährleisten.

Bevorzugt ist es, wenn die zumindest eine Manipulationseinheit zwischen dem zumindest einen Detektor und den Lichtquellen positioniert ist oder das Objekt mit der Manipulationseinheit zwischen dem zumindest einen Detektor und den Lichtquellen hindurchführbar ist, um eine Vergrößerung der Projektion und/oder eine Minimierung eines Projektionsfehlers einzustellen.

Vor allem für eine Vermessung einer Durchbiegung von Wafern ist die Manipulationseinheit erfindungsgemäß mit Vorteil als drehbarer Rotor ausgebildet ist, der mit einer Unterdruck erzeugenden Einrichtung in Verbindung steht, wobei der Rotor an einer Auflagefläche für das Objekt bzw. den Wafer zumindest eine Öffnung aufweist, an welcher der Unterdruck anlegbar ist. Das scheibenförmige Objekt bzw. der Wafer liegt dann in dessen Zentrum auf einer kleinen Anlagefläche des Rotors fest auf und kann zur Messung gedreht werden. Nach außen hin, also über die Anlagefläche hinweg, ist keine Unterstützung des Wafers durch den Rotor gegeben. Ein gegebenenfalls verbogener Wafer hängt nach unten, was durch die Messung bestimmbar ist.

Besonders bevorzugt verläuft zumindest eine Messebene parallel zum Strahlengang zumindest einer Lichtquelle, um eine Maximierung eines Messbereiches zu erreichen.

Mit Vorteil weist die Vorrichtung zumindest eine Positionierungseinheit zur Ausrichtung des Objektes auf. Dies erlaubt eine exakte Positionierung des Objektes für einen nachfolgenden Verarbeitungsschritt.

Zweckmäßigerweise wird eine erfindungsgemäße Vorrichtung für eine Vermessung von im Wesentlichen scheibenförmig ausgebildeten Objekten verwendet, da derartige Objekte einen nur sehr geringen Messfehler in der Tiefe verursachen.

Bevorzugt wird eine erfindungsgemäße Vorrichtung verwendet, wenn das Objekt als ein Wafer ausgebildet ist, vorzugsweise mit einer Dicke von weniger als 300 μm, insbesondere weniger als 150 μm. Die Verwendung hierfür ist vorteilhaft, da derartige Waferdicken bei der Halbleiterprozessierung häufig vorkommen und eine Durchbiegung aufgrund von Spannungen bei diesen Dicken besonders ausgeprägt ist.

Üblicherweise wird eine erfindungsgemäße Vorrichtung, zur Vermessung und/oder Positionierung und/oder Ausrichtung von Wafern in Transportboxen und/oder vor einem Halbleiterprozessierungsschritt, verwendet, um den Wafer möglichst exakt nach einer oder mehreren definierten Kristallorientierungen auszurichten und damit in weiterer Folge bessere Produkteigenschaften und einen geringeren Ausschuss zu erzielen.

Das weitere Ziel wird mit einem Verfahren nach Anspruch 9 erreicht. Der daraus resultierende Vorteil liegt in der zwei- bzw. dreidimensionalen Vermessung der Ränder bzw. Oberflächen von Objekten und der darin enthaltenen Tiefeninformation. Darüber hinaus gewährleistet ein derartiges Verfahren eine einfache und robuste Konstruktion sowie eine nur geringe Schmutzempfindlichkeit.

Ein erfindungsgemäßes Verfahren eignet sich insbesondere zur Vermessung einer Durchbiegung von dünnen Wafern mit einer Dicke von weniger als 300 μm. Es können aber auch Dicken und/oder Durchbiegungen von grundsätzlichen ebenen Materialbahnen wie Blechen oder Papierbahnen vermessen werden, wobei die Materialbahnen auch im kontinuierlichen Betrieb durch den Strahlungsbereich geführt werden können. Dabei ist es zweckmäßig, dass zumindest drei Lichtquellen eingesetzt werden und Kanten eines im Wesentlichen flachen Gebildes vermessen wird, wobei aus der Vermessung der Kanten eine Höhe des Gebildes und/oder eine Durchbiegung desselben ermittelt wird

Erfindungsgemäß wird zumindest eine Messebene zwischen den Lichtquellen und dem zumindest einen Detektor aufgespannt, um einen Messbereich zu maximieren.

Mit Vorteil werden Koordinaten von einem oder mehreren Rändern eines Objektes in zumindest einer Messebene bestimmt, um die Oberfläche des Objektes in Teilen oder als Ganzes zu erfassen.

Bevorzugt werden erhaltene Messdaten für eine Vermessung, Positionierung und/oder Ausrichtung von Objekten eingesetzt. Dies ermöglicht eine Verbesserung der Produktqualität, eine Verringerung des Ausschusses und damit letztlich auch eine Schonung der Umwelt.

Von Vorteil ist es auch, wenn erhaltene Messdaten für eine Vermessung einer Position, Höhe, Breite oder eines Durchmessers von sowohl transparenten als auch nicht transparenten Objekten verwendet werden, um damit ein noch breiteres Anwendungsgebiet zu erschließen. Insbesondere kann bei transparenten Objekten wie Glasscheiben durch eine Ecken- bzw. Kantenbestimmung eine Objektdicke ermittelt werden.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:

Fig. 1 eine erfindungsgemäße Vorrichtung mit einer zu einer Messebene senkrechten Manipulationseinheit;
Fig. 2 ein Schema eines Informationsflusses bei Verwendung einer erfindungsgemäßen Vorrichtung;
Fig. 3 eine erfindungsgemäße Vorrichtung mit einer zu einer Messebene parallelen Manipulationseinheit;
Fig. 4 ein beispielhaftes Detektorsignal hervorgerufen durch Belichtung eines nicht transparenten Objektes von einer punktförmigen, divergenten Lichtquelle einer erfindungsgemäßen Vorrichtung;
Fig. 5 ein beispielhaftes Detektorsignal hervorgerufen durch Belichtung eines transparenten Objektes von einer punktförmigen, divergenten Lichtquelle einer erfindungsgemäßen Vorrichtung.

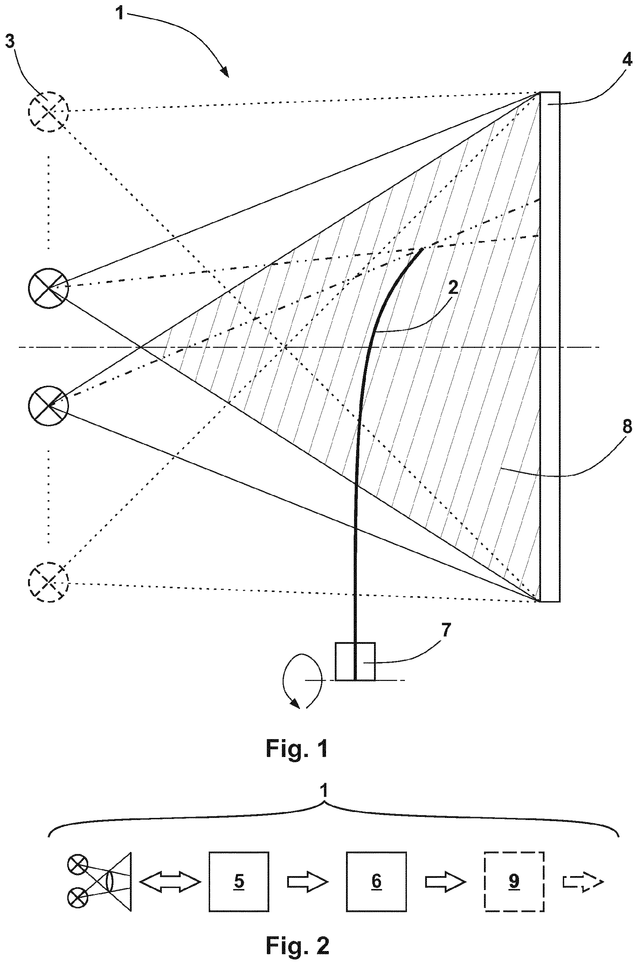

Ein nicht einschränkendes Ausführungsbeispiel einer erfindungsgemäßen Vorrichtung 1 und eines erfindungsgemäßen Verfahrens ist in Fig. 1 bis 5 dargestellt. Eine erfindungsgemäße Vorrichtung 1 umfasst mehr als eine punktförmige, divergente Lichtquelle 3, zumindest einen diesen gegenüberliegenden Detektor 4, zumindest eine zwischen den Lichtquellen 3 und dem zumindest einen Detektor 4 positionierte Manipulationseinheit 7, eine Steuereinheit 5, welche ein Zusammenspiel zwischen den Lichtquellen 3, dem Detektor 4 und der Manipulationseinheit 7 koordiniert, und eine Auswerteinheit 6, welche von der Steuereinheit 5 erhaltenen Messdaten aufbereitet und in eine für eine optionale Positionierungseinheit 9 verwendbare Form bringt und/oder die berechneten Koordinaten der Ränder bzw. Oberfläche des Objektes 2 für eine externe Verwendung zur Verfügung stellt und/oder diese in einem für eine weitere Verwendung geeigneten Format speichert.

Die punktförmigen, divergenten Lichtquellen 3 und das zu vermessende Objekt 2 verursachen auf dem zumindest einen Detektor 4 mehrere Schattenwürfe. Prinzipiell sind beliebige punktförmige, divergente Lichtquellen 3 für den Einsatz in der Vorrichtung 1 denkbar. Für den Fall einer besonders kompakten Ausführung einer erfindungsgemäßen Vorrichtung 1 erweisen sich Leuchtdioden und/oder Laser wie Festkörperlaser, insbesondere Laserdioden mit integrierter Optik, als besonders vorteilhaft, wobei für diese sowohl unterschiedliche als auch idente Wellenlängen Anwendung finden können. Je nach Anwendungsfall kann es vorgesehen sein, dass die Lichtquellen 3 einzeln, in Paaren oder Gruppen, aber auch als Gesamtheit angesteuert werden, um die durch das Objekt 2 verursachten Projektionen zu messen oder die verschiedenen Intensitätsverläufe der Lichtquellen 3 auf dem zumindest einen Detektor 4 für eine Kalibrierung der Vorrichtung 1 zu erfassen. Zusätzlich sind die Lichtquellen 3 entlang einer oder mehrerer Geraden angeordnet und/oder in einer Ebene positioniert, um die Koordinaten von einem oder mehreren Rändern des Objektes 2 mithilfe einfacher geometrischer Beziehungen berechnen zu können, z. B. mittels eines oder mehrerer Ähnlichkeitssätze, insbesondere Winkel- und/oder Strahlensätze. Außerdem kann es von Vorteil sein, wenn unter den zur Verfügung stehenden Lichtquellen 3 gezielt einzelne Lichtquellen 3 zu Paaren oder Gruppen kombiniert werden, um durch die Geometrie des Objektes 2 verursachte Abbildungsfehler zu minimieren, eine Empfindlichkeit der Vorrichtung 1 bzw. des Verfahrens zu justieren sowie Vorrichtungsparameter wie wirksame Höhe und/oder Basis der Vorrichtung 1 zu bestimmen. Um den inhärent zweidimensionalen Schnitt des zu vermessenden Objektes 2 mit einer Messebene 8 zu einer teilweisen oder gänzlichen Vermessung der Oberfläche des Objektes 2 zu ergänzen, kann es vorgesehen sein, dass fächerförmige oder strahlenförmige Abstrahlcharakteristiken von zumindest zwei Lichtquellen 3 eine divergent ausgeleuchtete Messebene 8 erzeugen und das ausgesendete Licht, durch rotierende oder drehbar gelagerte reflektierende Oberflächen wie Spiegel, über das Objekt 2 und einem oder mehreren dahinter liegenden Detektoren 4 geschwenkt wird. Es können aber auch mehrere Messebenen 8, zur simultanen Vermessung von mehreren Schnitten durch einen oder mehrere Detektoren 4, kombiniert werden.

Der Detektor 4 ist als zumindest eine optoelektronische Einrichtung ausgebildet und wandelt den durch einen oder mehrere Projektionen verursachten Intensitätsverlauf in elektronisch auswertbare Signale um. Der Detektor 4 kann ein- oder mehrteilig sowie zeilenförmig als auch flächig ausgebildet sein. Eine Konvertierung des optischen Signals in ein elektrisches Signal kann durch Fototransistoren, Fotodioden, Fotoresistoren oder insbesondere CCD- oder CMOS-Sensoren sowie ähnlich geeignete Bauelemente bzw. deren Kombination erfolgen. Durch eine Kombination mehrerer zeilenförmiger Detektoren 4 und/oder einem oder mehreren flächigen Detektoren 4 können mehrere Schnitte gleichzeitig oder sequenziell bestimmt werden sowie die Oberfläche des zu vermessenden Objektes 2 teilweise oder als Ganzes erfasst werden. Außerdem kann, durch eine günstige Positionierung des Objektes 2 in einer Messebene 8, eine vergrößernde Projektion erreicht werden (wenn das Objekt 2 den Lichtquellen 3 näher als dem zumindest einen Detektor 4 angeordnet ist), welche es erlaubt, mit einer größeren Auflösung zu messen als der zumindest eine Detektor 4 aufweist.

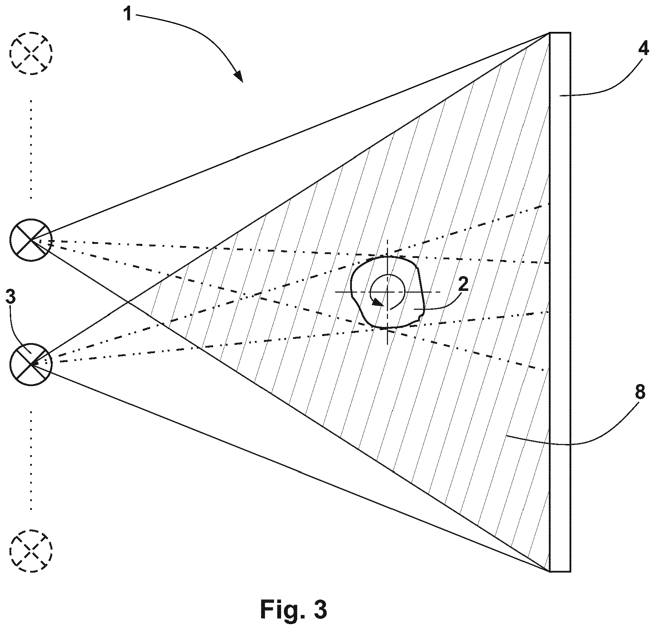

Die Manipulationseinheit 7 ist zwischen den Lichtquellen 3 und dem zumindest einen Detektor 4 positioniert und entlang einer oder mehrerer Achsen verschieb- und/oder drehbar gelagert, wobei eine Rotation oder Translation parallel oder senkrecht zu einer Messebene 8 erfolgt (Fig. 1 und 3). Durch die Translation und/oder Rotation der Manipulationseinheit 7 ist es möglich, die Ränder bzw. Oberfläche des Objektes 2 teilweise oder als Ganzes abzutasten. Bei Verwendung der Vorrichtung 1 für die Vermessung von Wafern ist die Manipulationseinheit 7 günstigerweise als eine Halterung ausgebildet und kann über eine Vakuumeinrichtung zum Ansaugen und/oder Halten eines Wafers verfügen. Hierfür ist die Manipulationseinrichtung 7 als drehbarer Rotor ausgebildet, der einen zentralen Kanal aufweist, der an einer Anlagefläche für den Wafer in zumindest eine Öffnung aufweist, sodass an der Anlagefläche der erforderliche Unterdruck erzeugbar ist. Darüber hinaus ist es besonders von Vorteil, wenn ein Auflagedurchmesser der Halterung kleiner als ein Waferdurchmesser ausgebildet ist; in der Regel beträgt die Auflagefläche einen Bruchteil der Waferfläche, damit der zu vermessende Wafer quasi frei im Raum liegt und ein Spannungszustand bzw. eine Durchbiegung möglichst frei von störenden Einflüssen ermittelt werden kann. Idealerweise ist ein Verhältnis der Auflagefläche zur Objektfläche kleiner als 0,1.

Alternativ, aber nicht beansprucht, ist es möglich, dass die Manipulationseinheit 7 als ein Förderband oder eine ähnlich geartete Einheit ausgebildet ist, um ein oder mehrere Objekte 2 im Vorbeifahren zu vermessen, beispielsweise während eines Transportes von einem Prozessschritt zu einem nachfolgenden. Eine derartige Ausbildung kommt insbesondere bei Materialbahnen infrage, beispielsweise Stahlblechen, Kunststoffbahnen oder Papierbahnen.

Prinzipiell kann jedes Objekt 2 in einer Vorrichtung 1 bzw. mithilfe eines erfindungsgemäßen Verfahrens vermessen werden, welches in der Lage ist, eine Ausbreitung einer ausgesendeten elektromagnetischen Strahlung von mehr als einer Lichtquelle 3, insbesondere von sichtbarem und/oder unsichtbarem Licht wie ultravioletter und/oder infraroter Strahlung derart zu beeinflussen, dass diese Beeinflussung bei zumindest einem zu den Lichtquellen 3 kompatiblen Detektor 4 messbar in Erscheinung tritt, beispielsweise in Form eines oder mehrerer Schattenwürfe.

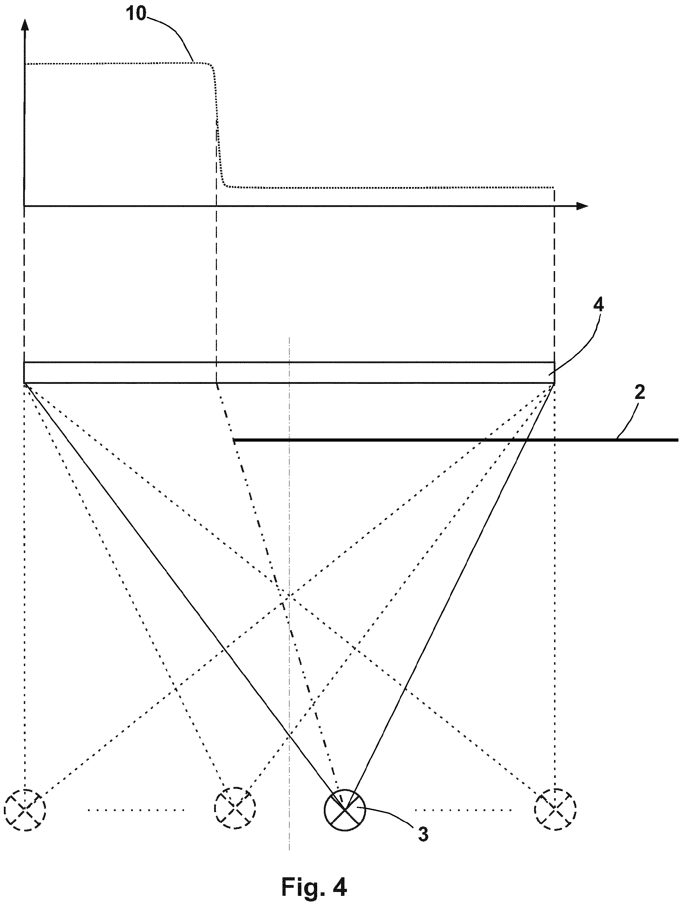

Ein beispielhaftes Detektorsignal 10, welches mithilfe der Auswerteeinheit 6 verarbeitet und durch eine divergente Lichtquelle 3 verursacht wird, ist in Fig. 4 illustriert und typisch für eine Verwendung einer Wellenlänge für die ein zu vermessendes Objekt 2 nicht transparent ist.

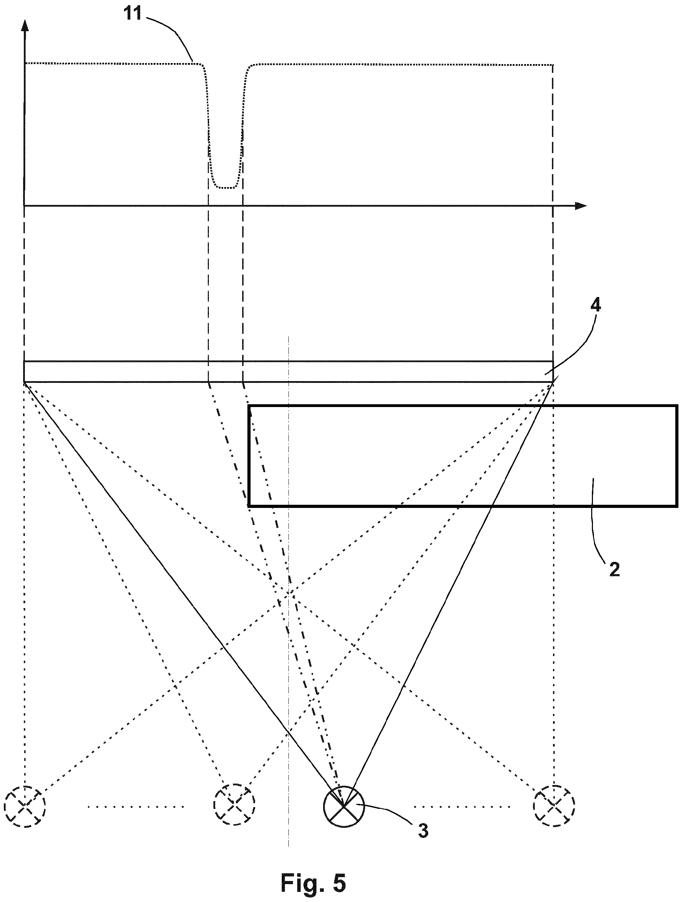

Ein weiteres Beispiel für ein mittels der Auswerteeinheit 6 verarbeiteten Detektorsignals 11 ist in Fig. 5 dargestellt, wobei ein zu vermessendes Objekt 2, für die verwendete divergente Lichtquelle 3, zumindest teilweise transparent ist.

Besonders von Vorteil ist es, wenn das zu vermessende Objekt 2 überwiegend flach ausgebildet ist, da ein etwaiger Projektionsfehler bedingt durch eine Abmessung, im Sinne einer Höhe oder Dicke, des Objektes 2 nahezu entfällt und die Annahme eines punktförmigen Randes, zur mathematischen Modellierung der Projektion, sich bestmöglich mit den realen Messgegebenheiten deckt. Als Beispiel hierfür ist die Vermessung der Durchbiegung von Wafern genannt (Fig. 1).

Die Steuereinheit 5 (Fig. 2) koordiniert eine Ansteuerung der Lichtquellen 3, ein Steuern und Auslesen von einem oder mehreren Detektoren 4, eine oder mehrere Ausrichtungen bzw. Bewegungen der Manipulationseinheit 7 sowie ein Auslesen bzw. eine Kontrolle eventuell weiterer vorhandener Sensoren und/oder Aktoren. Darüber hinaus stellt die Steuereinheit 5 erhaltene Messdaten für eine weitere Auswertung bereit und kann als ein PC, ein Mikrocontroller, ein Embedded System, eine speicherprogrammierbare Steuerung oder eine ähnlich geeignete Einheit ausgebildet sein.

Die Auswerteeinheit 6 (Fig. 2) berechnet aus den durch die Steuereinheit 5 bereitgestellten Messdaten die Koordinaten der Ränder bzw. Oberfläche des Objektes 2. Außerdem kann die Auswerteeinheit 6 aus den von der Steuereinheit 5 erhaltenen Messdaten eine Kalibrierung der für die Vermessung notwendigen Parameter, z. B. wirksame Höhe und/oder Basis, berechnen. Aus den berechneten Koordinaten werden die benötigten Eigenschaften des Objektes 2 wie Durchmesser, Lage, Durchbiegung, Fläche, Volumen etc. von der Auswerteeinheit 6 bestimmt und für eine weitere Verwendung aufbereitet. Dies kann durch eine Konvertierung der Daten in ein entsprechendes Protokoll oder Dateiformat erfolgen sowie durch eine Speicherung und/oder Übermittlung an eine weitere externe Einheit, z. B. eine Positionierungseinheit 9, geschehen. Für eine Konstruktion einer vollkapselbaren und/oder sehr kompakten Vorrichtung 1 kann es von Vorteil sein, wenn die Auswerteeinheit 6 und die Steuereinheit 5 in einer Einheit zusammengefasst werden.

Die von der Auswerteeinheit 6 zur Verfügung gestellten Daten können beispielsweise von einer Positionierungseinheit 9 genutzt werden, um für einen nachfolgenden Halbleiterprozessierungsschritt einen Wafer exakt auszurichten. Dies ist insofern günstig, als durch die Ausrichtung nach einer oder mehreren Kristallachsen des Halbleiters Bauteile mit verbesserten Eigenschaften, ein geringerer Ausschuss und daraus resultierend eine geringere Aufwendung von Ressourcen ermöglicht werden.

Wird ein Wafer gemäß Fig. 1 mit zwei Lichtquellen vermessen, was aber nicht beansprucht ist, lässt sich durch mathematische Modellierung auf einfache Weise eine Durchbiegung ermitteln, da der Radius der Manipulationseinheit 7 bzw. des Rotors sowie dessen z-Achse bekannt ist und der Wafer im Bereich der Auflagefläche nicht durchgebogen sein kann. Für den darüber hinausragenden Bereich des Wafers bzw. die Höhe kann eine quadratische Funktion wie folgt angesetzt werden, wobei $\alpha(\varphi)$ die Durchbiegung an jedem Winkelschritt angibt:

$$z(r,\varphi) = \begin{cases} \alpha(\varphi)(r(\varphi) - R_0)^2 & \text{für } r \geq R_0 \\ 0 & \text{für } 0 \leq r \leq R_0 \end{cases}$$

Das oben beschriebene Messprinzip ist nicht nur für die Vermessung von Wafern geeignet sondern auch für eine Vermessung von Objekten 2 mit ähnlichen Oberflächeneigenschaften. Außerdem beschränkt sich das Verfahren nicht auf die Vermessung eines Randes eines Objektes 2, sondern kann auch mehrere Ränder eines Objektes 2 und/oder mehrere Objekte 2 gleichzeitig bzw. abwechselnd vermessen. Insbesondere können durch Einsatz von zumindest drei Lichtquellen 3 mehrere Ecken bzw. Kanten von Materialbahnen oder anderen grundsätzliche ebenen Objekten vermessen und daraus Höhen oder auch Durchbiegungen berechnet werden.

Des Weiteren sind die Vorrichtung 1 und ein erfindungsgemäßes Verfahren dazu geeignet, den Durchmesser von einem oder mehreren Objekten 2 und/oder eine Breiten- und/oder Höhenmessung von einem oder mehreren Objekten 2 vorzunehmen. Außerdem kann ein erfindungsgemäßes Verfahren auch ohne eine Manipulationseinheit 7 dazu genutzt werden, ein oder mehrere Objekte 2 zu vermessen, z. B. beim Fliegen und/oder Fallen durch eine oder mehrere Messebenen 8.

Die durch eine erfindungsgemäße Vorrichtung 1 bzw. ein erfindungsgemäßes Verfahren erhaltenen Daten können auf einer oder mehreren Anzeigen visualisiert und/oder einer statistischen Auswertung zugeführt werden, um den Einfluss der Halbleiterprozessierung und/oder der Positionierung des Wafers während des Herstellungsverfahrens auf das Endprodukt zu untersuchen und mittels der daraus gewonnenen Erkenntnisse eine entsprechende Prozessoptimierung bzw. ein Qualitätsmanagement vorzunehmen.

Zusammenfassend ermöglichen eine Vorrichtung 1 und ein erfindungsgemäßes Verfahren eine einfache, robuste Konstruktion sowie eine zusätzliche Bestimmung einer Tiefeninformation mit nur minimalem Konstruktionsaufwand.

**Patentansprüche**

1.  Vorrichtung (1) zur optischen Messung zumindest einer Dimension eines flachen Objektes (2) wie eines Wafers, umfassend zumindest einen Detektor (4), mehr als zwei dem Detektor gegenüberliegende und im Wesentlichen punktförmige, divergente Lichtquellen (3), deren Projektionen der Detektor (4) erfasst sowie zumindest eine Manipulationseinheit (7) zum Halten und/oder Bewegen des Objektes (2), wobei die Manipulationseinheit (7) als drehbarer Rotor ausgebildet ist, der mit einer Unterdruck erzeugenden Einrichtung in Verbindung steht, wobei der Rotor an einer Auflagefläche für das Objekt (2) zumindest eine Öffnung aufweist, an welcher der Unterdruck anlegbar ist, **dadurch gekennzeichnet, dass** zumindest eine Messebene (8) zwischen den Lichtquellen (3) und dem zumindest einen Detektor (4) aufgespannt ist, um einen Messbereich zu maximieren und aus einer Vermessung von Kanten des Objektes (2) eine Höhe und/oder eine Durchbiegung desselben zu ermitteln.

2.  Vorrichtung (1) nach Anspruch 1, **dadurch gekennzeichnet, dass** die Lichtquellen (3) eine fächerförmige Abstrahlungscharakteristik aufweisen.

3.  Vorrichtung (1) nach Anspruch 1 oder 2, **dadurch gekennzeichnet, dass** zumindest zwei Lichtquellen (3), vorzugsweise alle, entlang einer Geraden angeordnet sind.

4.  Vorrichtung (1) nach einem der Ansprüche 1 bis 3, **dadurch gekennzeichnet, dass** der zumindest eine Detektor (4) als optoelektronischer Detektor (4) ausgebildet ist.

5.  Vorrichtung (1) nach einem der Ansprüche 1 bis 4, **dadurch gekennzeichnet, dass** zumindest eine Steuereinheit (5) und zumindest eine Auswerteeinheit (6) vorgesehen sind und die zumindest eine Manipulationseinheit (7) mit der Steuereinheit (5) in Wirkverbindung steht.

6.  Vorrichtung (1) nach einem der Ansprüche 1 bis 5, **dadurch gekennzeichnet, dass** die zumindest eine Manipulationseinheit (7) parallel oder senkrecht zu einer Messebene (8) drehbar und/oder verschiebbar gelagert ist.

7.  Vorrichtung (1) nach einem der Ansprüche 1 bis 6, **dadurch gekennzeichnet, dass** die zumindest eine Manipulationseinheit (7) zwischen dem zumindest einen Detektor (4) und den Lichtquellen (3) positioniert ist oder das Objekt (2) mit der Manipulationseinheit (7) zwischen dem zumindest einen Detektor (4) und den Lichtquellen (3) hindurchführbar ist.

8. Vorrichtung (1) nach einem der Ansprüche 1 bis 7, **dadurch gekennzeichnet, dass** die Vorrichtung (1) zumindest eine Positionierungseinheit (9) zur Ausrichtung des Objektes (2) aufweist.

9. Verfahren zur optischen Messung zumindest einer Dimension eines flachen Objektes (2), wobei das Objekt (2) mit Licht von einer im Wesentlichen punktförmigen, divergenten Lichtquelle (3) beleuchtet und dessen Projektion von zumindest einem sich im Strahlungsbereich befindenden Detektor (4) erfasst wird, wobei zumindest drei dem Detektor gegenüberliegende Lichtquellen (3) mit zumindest drei Projektionen auf dem zumindest einen Detektor (4) erfasst werden und aus dadurch erhaltenen Daten eine Tiefeninformation des Objektes (2) bestimmt wird, wobei ein Wafer vermessen und dessen Höhe und/oder Durchbiegung bestimmt wird, wobei der Wafer während der Messung durch Unterdruck auf einem Rotor gehalten wird, dessen Auflagefläche für den Wafer kleiner als dieser ist, **dadurch gekennzeichnet, dass** Kanten des Wafers vermessen werden, wobei aus der Vermessung der Kanten eine Höhe des Wafers und/oder eine Durchbiegung desselben ermittelt wird, wobei zumindest eine Messebene (8) zwischen den Lichtquellen (3) und dem zumindest einen Detektor (4) aufgespannt wird, um einen Messbereich zu maximieren.

10. Verfahren nach Anspruch 9, **dadurch gekennzeichnet, dass** ein transparentes Objekt (2) vermessen wird.

**Claims**

1. A device (1) for the optical measurement of at least one dimension of a flat object (2) such as a wafer, comprising at least one detector (4), more than two divergent light sources (3) which are positioned opposite to the detector and are essentially pointshaped, the projections of which light sources (3) the detector (4) detects, as well as at least one manipulation unit (7) for holding and/or moving the object (2), wherein the manipulation unit (7) is designed as a rotatable rotor, which is connected to a vacuumgenerating device, wherein the rotor has at least one opening at a support surface for the object (2), at which opening the vacuum can be applied, **characterized in that** at least one measuring plane (8) is spread between the light sources (3) and the at least one detector (4) to maximize a measuring area and to determine a height and/or a deflection of the object (2) from a measurement of edges of the same.

2. The device (1) according to claim 1, **characterized in that** the light sources (3) have a fan-shaped emission characteristic.

3. The device (1) according to claim 1 or 2, **characterized in that** at least two, preferably all, light sources (3) are arranged along a straight line.

4. The device (1) according to one of claims 1 to 3, **characterized in that** at least one detector (4) is designed as an optoelectronic detector (4).

5. The device (1) according to one of claims 1 to 4, **characterized in that** at least one control unit (5) and at least one evaluation unit (6) are provided and the at least one manipulation unit (7) is operatively connected with the control unit (5).

6. The device (1) according to one of claims 1 to 5, **characterized in that** the at least one manipulation unit (7) is supported parallel or perpendicular to a measuring plane (8) in a rotatable and/or displaceable manner.

7. The device (1) according to one of claims 1 to 6, **characterized in that** the at least one manipulation unit (7) is positioned between the at least one detector (4) and the light sources (3), or the object (2) with the manipulation unit (7) can be passed through between the at least one detector (4) and the light sources (3).

8. The device (1) according to any one of claims 1 to 7, **characterized in that** the device (1) has at least one positioning unit (9) for the alignment of the object (2).

9. A method for the optical measurement of at least one dimension of a flat object (2), wherein the object (2) is illuminated with light from an essentially pointshaped, divergent light source (3) and the projection of it is captured by at least one detector (4) located in the emission area, wherein at least three light sources positioned opposite the detector (3) are captured with at least three projections on the at least one detector (4) and a depth information of the object (2) is determined from the data obtained thereby, wherein a wafer is measured and its height and/or deflection is determined, wherein the wafer is held on a rotor by a vacuum during the measurement and the support surface of said rotor for the wafer is smaller than the latter, **characterized in that** edges of the wafer are measured, wherein a height of the wafer and/or a deflection of the same is determined from the measurement of the edges, wherein at least one measuring plane (8) is spread between the light sources (3) and the at least one detector (4) to maximize a measuring range.

**10.** The method according to claim 9, **characterized in that** a transparent object (2) is measured.

**Revendications**

**1.** Dispositif (1), pour la mesure optique d'au moins une dimension d'un objet (2) plat, tel qu'une tranche, comprenant au moins un détecteur (4), plus de deux sources lumineuses (3) divergentes, placées au vis-à-vis du détecteur et sensiblement de forme ponctuelle dont les projections sont détectées par le détecteur (4), ainsi qu'au moins une unité de manipulation (7), pour maintenir et/ou déplacer l'objet (2), l'unité de manipulation (7) étant conçue sous la forme d'un rotor rotatif, qui est en liaison avec un système créateur de dépression, le rotor comportant sur une surface de dépose de l'objet (2) au moins un orifice, sur lequel la dépression est susceptible d'être appliquée, **caractérisé en ce qu'**au moins un plan de mesure (8) est tendu entre les sources lumineuses (3) et l'au moins un détecteur (4) pour maximiser une plage de mesure et déterminer à partir d'une mensuration d'arêtes de l'objet (2) une hauteur et/ou un fléchissement de celui-ci.

**2.** Dispositif (1) selon la revendication 1, **caractérisé en ce que** les sources lumineuses (3) font preuve d'une caractéristique de diffusion en forme d'éventail.

**3.** Dispositif (1) selon la revendication 1 ou 2, **caractérisé en ce qu'**au moins deux sources lumineuses (3), de préférence toutes sont placées le long d'une droite.

**4.** Dispositif (1) selon l'une quelconque des revendications 1 à 3, **caractérisé en ce que** l'au moins un détecteur (4) est conçu sous la forme d'un détecteur (4) optoélectronique.

**5.** Dispositif (1) selon l'une quelconque des revendications 1 à 4, **caractérisé en ce qu'**au moins une unité de mesure (5) et au moins une unité d'évaluation (6) sont prévues et l'au moins une unité de manipulation (7) est en liaison active avec l'unité de commande (5).

**6.** Dispositif (1) selon l'une quelconque des revendications 1 à 5, **caractérisé en ce que** l'au moins une unité de manipulation (7) est logée en étant rotative et/ou déplaçable à la parallèle ou à la perpendiculaire d'un plan de mesure (8).

**7.** Dispositif (1) selon l'une quelconque des revendications 1 à 6, **caractérisé en ce que** l'au moins une unité de manipulation (7) est positionnée entre l'au moins un détecteur (4) et les sources lumineuses (3) ou l'objet (2) est susceptible d'être passé avec l'unité de manipulation (7) entre l'au moins un détecteur (4) et les sources lumineuses (3).

**8.** Dispositif (1) selon l'une quelconque des revendications 1 à 7, **caractérisé en ce que** le dispositif (1) comporte au moins une unité de positionnement (9) pour l'orientation de l'objet (2) .

**9.** Procédé pour la mesure optique d'au moins une dimension d'un objet (2) plat, l'objet (2) étant éclairé par de la lumière d'une source lumineuse (3) divergente, sensiblement de forme ponctuelle et sa projection étant détectée par au moins un détecteur (4) se trouvant dans la zone de rayonnement, au moins trois sources lumineuses (3) placées au vis-à-vis du détecteur étant détectées avec au moins trois projections sur l'au moins un détecteur (4) et à partir de données obtenues de ce fait, une information sur la profondeur de l'objet (2) étant déterminée, une tranche étant mesurée et sa hauteur et/ou son fléchissement étant déterminé,
pendant la mesure, la tranche étant maintenue par dépression sur un rotor, dont la surface de dépose pour la tranche est inférieure à celle-ci, **caractérisé en ce que** des arêtes de la tranche sont mesurées, à partir de la mensuration des arêtes, une hauteur de la tranche et/ou un fléchissement de celle-ci étant déterminé(e), au moins un plan de mesure (8) étant tendu entre les sources lumineuses (3) et l'au moins un détecteur (4), pour maximiser une plage de mesure.

**10.** Procédé selon la revendication 9, **caractérisé en ce qu'**un objet (2) transparent est mesuré.

**Fig. 1**

**Fig. 2**

**Fig. 3**

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10161226 A1
- DE 19757067 A1
- WO 2010118449 A2
- DE 102007024525 A1